# EUROPEAN PATENT SPECIFICATION

(11) **EP 2 512 188 B1**
(45) Date of publication and mention of the grant of the patent: **11.06.2014**
(21) Application number: 11162666.9
(22) Date of filing: 15.04.2011
(51) Int. Cl.: H04W 48/16, H04W 84/12

(54) **Methods and apparatus for use in efficiently scanning for wireless networks based on application type**
Verfahren und Vorrichtung zur Verwendung beim effizienten Scannen drahtloser Netzwerke auf Grundlage des Anwendungstyps
Procédés et appareil pour l'utilisation efficace du balayage pour des réseaux sans fil basés sur le type d'application

(43) Date of publication of application: 17.10.2012
(73) Proprietor: BlackBerry Limited, Waterloo, ON N2K 0A7 (CA)
(72) Inventor: Kholaif, Ahmad Mohammad Mohammad, Waterloo Ontario N2L 3W8 (CA); Rawlins, Rudy Eugene, Waterloo Ontario N2L 3W8 (CA)
(74) Representative: Greenaway, Martin William

(56) References cited:
- EP-A1- 1 937 007
- WO-A1-2005/112358
- US-A1- 2009 022 076

## Description

### BACKGROUND

### Field Of The Technology

The present disclosure relates generally to mobile communication devices which communicate in wireless communication networks, such as wireless local area networks (WLANs), and more particularly to scanning to search for and connect with such wireless networks.

### Description Of The Related Art

A mobile communication device, such as a portable battery-powered wireless communication device, is operative to communicate in wireless communication networks. For example, the mobile device may communicate through wireless access points (APs) of wireless local area networks (WLANs) which operate in accordance with IEEE 802.11 standards or the like.

When the mobile device is powered-on, or radio frequency (RF) coverage is regained after a coverage loss, the mobile device performs a scanning operation with use of its wireless transceiver to identify one or more available wireless networks in its surrounding area. During each scanning operation, the mobile device may transmit a probe request to each wireless network identified in one or more network profiles stored in the mobile device, and wait for a probe response from the network in return. Each time the scanning operation fails to result in any connection between the mobile device and a wireless network, the scanning operation is repeated by the mobile device after delaying for a delay period. This process continually repeats until the mobile device connects with one of the wireless networks.

EP1937007 discloses maintaining profile lists of WLANs depending on location. While at a particular determined location, the terminal only scans for WLANs on the list for this position.

There is a need for more efficient scanning procedures with reduced power consumption in these and similar environments.

### BRIEF DESCRIPTION OF THE DRAWINGS

Embodiments of present invention will now be described by way of example with reference to attached figures, wherein:
FIG. 1 is an illustrative representation of a communication system which includes wireless communication networks within which a mobile communication device may operate;
FIG. 2 is a schematic block diagram of the mobile communication device of FIG. 1;
FIG. 3 is an illustration representation of a part of the communication system of FIG. 1, which includes different types of WLANs, including WLANs having external network connectivity, WLAN appliances (e.g. a streaming media player), and ad hoc networks, as some examples.
FIG. 4 is an illustrative example of an exemplary user interface of the mobile communication device;
FIG. 5 is an illustrative representation of memory of the mobile communication device which includes a plurality of applications;
FIG. 6 is a flowchart of a method for use in scanning for wireless networks based on application type; and
FIG. 7 is a flowchart of a further method for use in scanning for wireless networks based on application type.

### DETAILED DESCRIPTION OF THE PREFERRED EMBODIMENTS

Techniques for efficient scanning for WLANs based on application type are described. A mobile device invokes a first application or a second application. When the first application is invoked, the mobile device scans to search for one or more wireless networks identified in a first subset of wireless network profiles stored in the mobile device. When the second application is invoked, the mobile device scans to search for one or more wireless networks identified in a second subset of wireless network profiles stored in the mobile device. Advantageously, a suitable WLAN may be more efficiently identified with use of a technique which reduces power consumption of the mobile device.

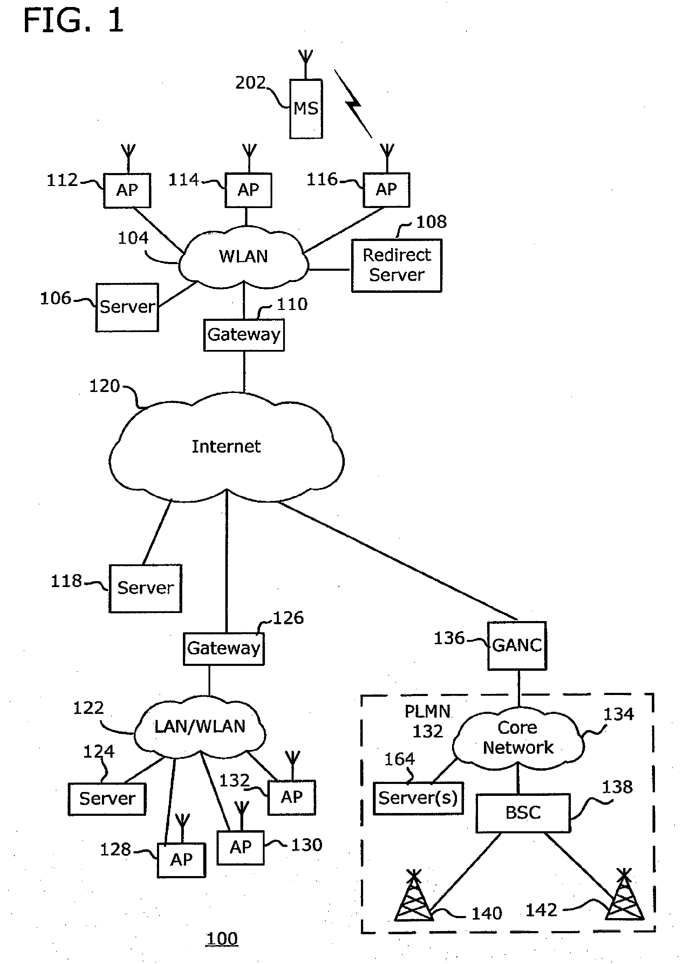

To illustrate one exemplary network architecture within which the techniques of the present disclosure may be practiced, FIG. 1 is a communication system 100 which includes a wireless local area network (WLAN) 104 within which a mobile communication device 202 may operate. WLAN 104 has a plurality of wireless access points (APs) 112, 114, and 116 for wireless communications with mobile device 202. In the present embodiment, WLAN 104 and mobile device 202 operate in accordance with IEEE 802.11 standards. Such WLANs are identifiable by a mobile device 202 from a Set Service Identifier (SSID) or Extended SSID (ESSID). WLAN 104 also includes one or more servers 106, a redirect server 108, and a gateway 110. Server 106 may provide data, applications, and/or functionality for communication services in WLAN 104.

Mobile device 202 may also operate for communications in different LANs/WLANs, such as WLAN 122. Similar to WLAN 104, WLAN 122 has a plurality of wireless APs 128, 130 and 132, one or more servers 124, and a gateway 126. In this embodiment, WLAN 122 is a private communication network of an enterprise (small company, corporation, etc.) associated with mobile device 202. Such WLANs 104 and 122 may provide or allow access to various data and communication services to its terminals. For example, the WLANs may provide for access to Internet 120 via the Web browser application, or voice telephony communication services with use of Voice over IP (VoIP) communications or other techniques.

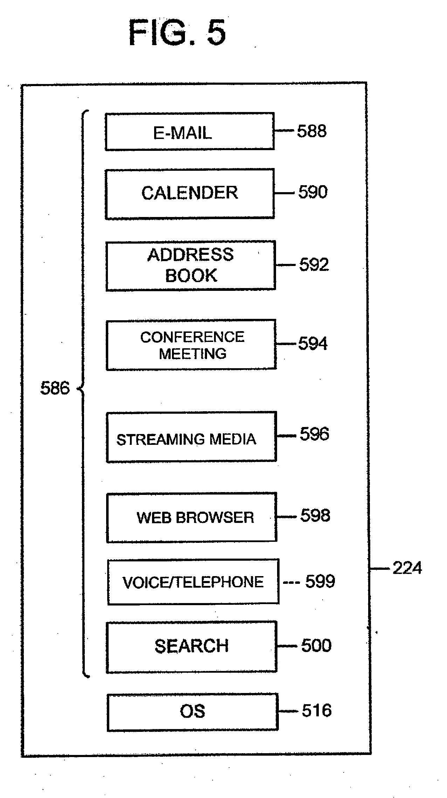

For "push-type" data or message synchronization services, mobile device 202 is enabled to maintain data synchronization with a server (e.g. server 106 or 118) for user data of an application associated with a user account. The application of mobile device 202 and the server may be or include, for example, an electronic mail (e-mail) application program for the communication of e-mail messages. In this case, the data synchronization is a message synchronization for the e-mail messages associated with the user account for an e-mail application program. The data synchronization may alternatively or additionally be or include an address book synchronization for address book contacts in an address book organizer, or a calendar appointment synchronization for calendar appointments in a calendar application program. These and other applications of mobile device 202 are also identified later in relation to FIG. 5. For the data-synchronized communications, the server maintains storage of a mapping of a user account name or identifier of the user account with a personal identification number of mobile device 202. When communications are required with mobile device 202, the personal identification number is used to route the messages to/from mobile device 202 through communication system 100.

In contrast to WLAN 122, WLAN 104 may be a public WiFi "hotspot" for public use and include what is referred to as a "captive portal" or "walled garden." For devices connected in WLAN 104 via one of wireless APs 112, 114, and 116, gateway 110 is configured to permit or deny access to the data, applications, and/or functionality, as well as to permit or deny external access outside of WLAN 104 to Internet 120. To do this, gateway 110 has a set of IP address filters which define a set of addresses that are permissible/impermissible, if any at all, for access by devices. Access by a device depends on whether or not a device has been authorized and what access rights are given upon authorization.

Typically, when a request by a device in WLAN 104 is made prior to proper authorization, gateway 110 is configured to redirect the request to redirect server 108. In response, redirect server 108 is configured to respond to mobile device 202 to provide data for producing information (e.g. a Web page information) which is rendered in a visual display of mobile device 202 via a Web browser application. The information may solicit a user response. For example, the information may solicit a user registration or login with user fields for entering a user name and/or password information. As another example, the information may solicit a user payment with user payment fields for entering in user payment information. Further, the information may solicit a user acceptance of terms of use, a license, or a legal disclaimer (options of "YES" or "NO", or "ACCEPT" or "DECLINE"). Redirect server 108 may be referred to by a different name depending on any more specific purpose (e.g. authentication server, registration server, user confirmation server, etc.).

The user will enter a user response via the Web browser application, for example, which is sent by mobile device 202 and received by gateway 110. Gateway 110 identifies whether the received user response is sufficient (e.g. whether the user name and password match prestored user name and password information, whether the user payment is accepted, whether the user acceptance is confirmed, etc.). If the user response is deemed sufficient, gateway 110 permits access to the data, applications, and/or functionality in or outside of WLAN 104.

Again, in contrast to WLAN 104, WLAN 122 may be a private communication network of an enterprise associated with mobile device 202. For devices attempting to access WLAN 122 via Internet 120, gateway 126 is configured to permit or deny internal access to the data, applications, and/or functionality in WLAN 122. For devices connected in WLAN 122 via one of wireless APs 128, 130, and 132, gateway 126 may be configured to permit or deny access to the data, applications, and/or functionality offered via WLAN 122 depending on whether or not a device has been authorized and what access rights are given upon authorization.

Communication may also be configured in accordance with Generic Access Network (GAN) technologies. Using GAN based technologies, mobile device 202 may also access communication services from a core network 134 of a Public Land Mobile Network (PLMN) 132 (e.g. cellular). GAN technology may provide, amongst other things, a voice communication service for mobile device 202 via the WLAN hotspot. PLMN 132 includes a core network 136, a plurality of base station controllers such as a base station controller (BSC) 138 coupled to core network 136, and a plurality of base stations such as a base station (BS) 140 and a base station 142 coupled to associated BSCs 138. Core network 136, BSC 138, and BS 140 operate in a conventional fashion as well-documented. Other PLMNs in the environment have a similar or the same architecture as PLMN 132. Such environments may be referred to as cellular telecommunications networks.

Communications between WLAN 104 and core network 134 of PLMN 132 may be facilitated through a suitable connecting network such as a broadband, wide-area IP communication network (e.g. the Internet 120) or any suitable public or private wide area network. Gateway/controller or GAN controller (GANC) 136 is provided between the Internet 120 and core network 134 of PLMN 132 in order to facilitate access to core network 134 by terminals through alternative links (e.g. radio links wireless APs 112, 114, and 116) different than those conventional radio links offered in the PLMN 132 (e.g. radio links of base stations 140 and 142). Thus, mobile device 202 may also access services of core network 134 of PLMN 132 via WLANs, such as WLAN 104, through use of a WLAN radio interface as opposed to a cellular telephony interface. For such communications, GANC 136 and mobile device 202 are adapted to establish and maintain a (secure) tunnel connection between each other through the intervening networks. Note that WLAN 104 may be operator-controlled or provided (e.g. controlled or provided by the operator associated with PLMN 132), user-controlled or provided (e.g. controlled or provided by the end user of mobile device 202), or third-party-controlled or provided.

Again, GANC 136 operates in accordance with GAN based technology (formerly known as Unlicensed Mobile Access (UMA), and may be or include GANC 136 (formerly known as UMA Network Controller or UNC) or the like. In this case, terminals including mobile device 202 are enabled with GAN technology for operating in a GAN mode of operation. GAN methodologies are known and described in publicly available documentation. Mobile device 202 with GAN-enabled, dual-mode operation may be within operating range of WLAN 104 for communications. Upon connecting, mobile device 202 contacts GANC 136, via WLAN 104 and the Internet 120, to be authenticated and authorized to access voice and data communication services of core network of PLMN 132. If approved, the subscriber's current location information is stored in core network 134 of PLMN 132 and, from that point on, all voice and data traffic for mobile device 202 is routed to the device via WLAN 104, in contrast to a radio access network (RAN) of PLMN 132 which includes BSC 138 and BSs 140 and 142. In this state, mobile device 202 is operating in a GAN mode of operation. When a call is established for mobile device 202 while operating within WLAN 104, the call connection for the call is routed within core network 134 but RF resources of WLAN 104 are utilized.

Today, mobile device 202 may be further configured to enter into an access point (AP) mode of operation, so that other communication devices may associate with them for direct RF communications therebetween. This AP mode of operation, which may be referred to as a "mobile AP mode" or the like, provides a benefit due to the high data rates available over WLAN links. Here, again, the data may be communicated directly between the mobile devices without the data traversing any wireless network infrastructure, where one of the mobile devices is set to operate or serve as an access point (AP) (switching operation from as an end terminal) and the other communication device operates as an end terminal to associate and connect with the AP (i.e. the mobile device 202 operating as an AP) for communications. It is possible that when mobile device 202 operates in the AP mode, it may also operate as a client with another AP.

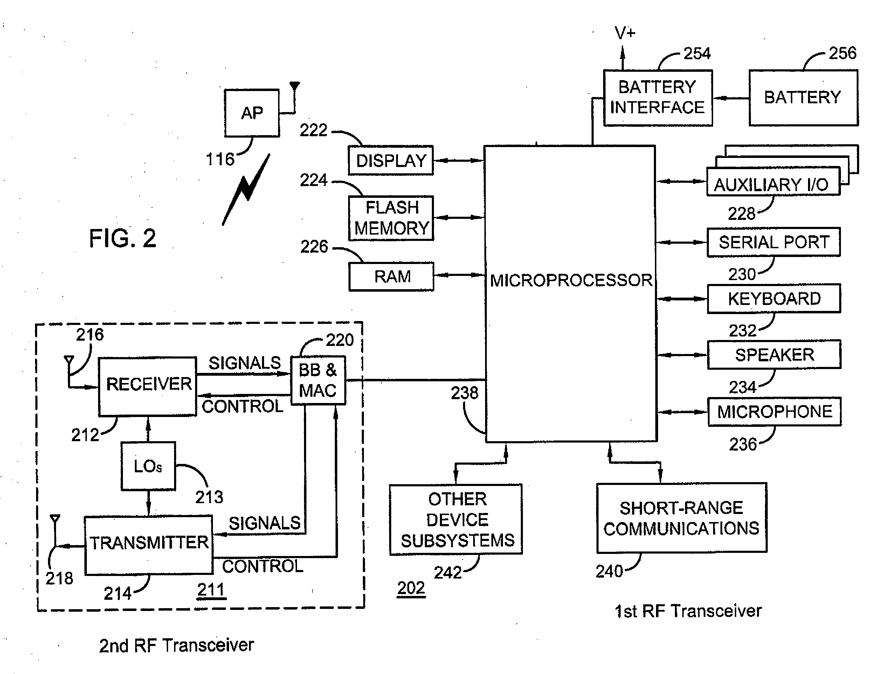

Referring now to FIG. 2, electrical components of a typical mobile communication device 202 (e.g. a mobile station, mobile terminal, or user equipment "UE", or the like) which operates with wireless APs of communication system 100 of FIG. 1 will be described. Mobile device 202 may be representative of one or more terminals shown and described in relation to FIG. 1. Mobile device 202 may be a two-way communication device having at least voice and/or advanced data communication capabilities, including the capability to communicate with other computer systems. Also, mobile device 202 may be a wireless communication device which operates in accordance with an IEEE 802.11 standards. Depending on the multiple functionality provided by mobile device 202, it may be referred to as one of more of the following: a data messaging device, a two-way pager, a cellular-type telephone with data messaging capabilities, a wireless Internet appliance, or a data communication device (with or without telephony capabilities).

As shown in FIG. 2, mobile device 202 is adapted to wirelessly communicate with wireless APs of WLANs, such as AP 116 of WLAN 104 of FIG. 1. For communication with AP 116, mobile device 202 utilizes a communication subsystem 211. Depending on the type of device, mobile device 202 may also be configured to wirelessly communicate with other systems such as cellular telecommunication systems. With such configuration, mobile device 202 may be referred to as a "dual mode" mobile device. Although mobile device 202 may have separate and independent subsystems for these purposes, at least some portions or components of these otherwise different subsystems may be shared where possible.

Communication subsystem 211 includes a receiver 212, a transmitter 214, and associated components, such as one or more (e.g. embedded or internal) antenna elements 216 and 218, local oscillators (LOs) 213, and a processing module such as a baseband (BB) and media access control (MAC) processing module 220. Communication subsystem may be or referred to as a radio frequency (RF) transceiver or wireless transceiver. As will be apparent to those skilled in the field of communications, the particular design of communication subsystem 211 depends on the communication network in which mobile device 202 is intended to operate. In the present disclosure, communication subsystem 211 (including its associated processor/processing components) are operative in accordance with IEEE 802.11 standards.

Mobile device 202 may send and receive communication signals through the network after required network procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in BB/MAC processing module 220. In a similar manner, signals to be transmitted are processed, including modulation and encoding, for example, by BB/MAC processing module 220. These processed signals are input to transmitter 214 for digital-to-analog (D/A) conversion, frequency up conversion, filtering, amplification and transmission through the network via antenna 218. BB/MAC processing module 220 not only processes communication signals, but may also provide for receiver and transmitter control. Note that receiver 212 and transmitter 214 may share one or more antennas through an antenna switch (not shown in FIG. 2), instead of having two separate dedicated antennas 216 and 218 as shown.

Since mobile device 202 may be a handheld portable battery-powered device, it also includes a battery interface 254 for receiving one or more rechargeable batteries 256. Such a battery 256 provides electrical power to most if not all electrical circuitry in mobile device 202, and battery interface 254 provides for a mechanical and electrical connection for it. Battery interface 254 is coupled to a regulator (not shown in FIG. 2) that provides a regulated voltage V to all of the circuitry.

Mobile device 202 includes a microprocessor 238 (one type of processor or controller) that controls overall operation of mobile device 202. This control includes the techniques of the present disclosure. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Keyboard 232 may be a complete alphanumeric keyboard and/or telephone-type keypad. On the other hand, keyboard 232 and display 222 may be replaced or enhanced with a touch screen display or other suitable input mechanism, or replaced or enhanced with a voice-activated input module.

Operating system software used by microprocessor 238 may be stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226. Microprocessor 238, in addition to its operating system functions, enables execution of software applications on mobile device 202. A predetermined set of applications that control basic device operations, including data and/or voice communication applications, will normally be installed on mobile device 202 during its manufacture. This includes applications or modules which are configured to perform the network selection techniques of the present disclosure. For this reason, microprocessor 238 (and any other processor(s) or modules of mobile device 202) may enable execution of particular applications or modules for performing enhanced network selection techniques for access to multiple aggregator services.

Another application that may be loaded onto mobile device 202 may be a messaging application, such as a personal information manager (PIM) application, which has the ability to organize and manage data items. The data items may relate to user data items such as, but not limited to, e-mail, calendar events, voice mails, appointments, and task items. The PIM application has the ability to send and receive data items via the wireless network. In one embodiment, PIM data items are seamlessly integrated, synchronized, and updated via the wireless network, with the wireless device user's corresponding data items stored and/or associated with a host computer system thereby creating a mirrored host computer on mobile device 202 with respect to such items. This is especially advantageous where the host computer system is the wireless device user's office computer system. Additional applications may also be loaded onto mobile device 202 through network, an auxiliary I/O subsystem 228, serial port 230, short-range communications subsystem 240, or any other suitable subsystem 242, and installed by a user in RAM 226 or a non-volatile store (not shown) for execution by microprocessor 238. Such flexibility in application installation increases the functionality of mobile device 202 and may provide enhanced on-device functions, communication-related functions, or both. For example, secure communication applications may enable electronic commerce functions and other such financial transactions to be performed using mobile device 202.

In a data communication mode, a received signal such as a text message, an e-mail message, or web page download will be processed by communication subsystem 211 and input to microprocessor 238. Microprocessor 238 may further process the signal for output to display 222 or alternatively to auxiliary I/O device 228. A user of mobile device 202 may also compose data items, for example, using keyboard 232 in conjunction with display 222 and possibly auxiliary I/O device 228. The composed items may be transmitted over a communication network through communication subsystem 211.

For voice communications, the overall operation of mobile device 202 is substantially similar, except that the received signals would be output to speaker 234 and signals for transmission would be generated by microphone 236. Alternative voice or audio I/O subsystems, such as a voice message recording subsystem, may also be implemented on mobile device 202. Although voice or audio signal output may be accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile device 202 by providing for information or software downloads to mobile device 202 other than through a wireless communication network. The alternate download path may, for example, be used to load an encryption key onto mobile device 202 through a direct and thus reliable and trusted connection to thereby provide secure device communication.

Short-range communications subsystem 240 of FIG. 2 is an additional component that provides for communication between mobile device 202 and different systems or devices, which need not necessarily be similar devices. In this embodiment, communication subsystem 240 is a BLUETOOTH^{®} communication module to provide for communication with similarly enabled systems and devices. Note that the BLUETOOTH^{®} standards may be defined by or based on BLUETOOTH^{®} Specification Version 2.0, Volumes 1 and 2, for example.

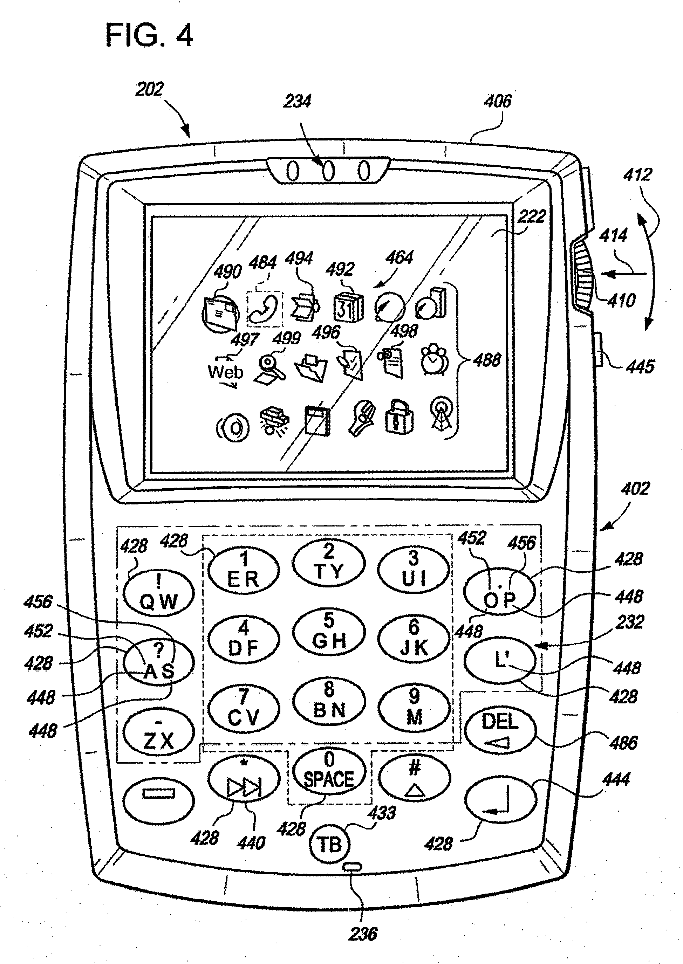

Referring ahead to FIG. 4, an illustrative representation of an exemplary user interface 402 of mobile device 202 is shown. Mobile device 202 includes at least display 222, keyboard 232, speaker 234, microphone 236, and a cursor or view positioning mechanism such as a positioning wheel 410 (e.g. a scrollwheel) or a trackball 433. Although shown enlarged in FIG. 4 for clarity, this mobile communication device 202 is sized to be a handheld portable device. As an alternative to or in addition to positioning wheel 410 and/or trackball 433, a wide range of one or more pointing or cursor/view positioning mechanisms such as a touch pad, a track pad, a joystick button, a mouse, a touchscreen, a tablet, or other whether presently known or unknown, may be employed. The cursor may be or include a pointer, a movable item or other visual cue used to mark a position or point to another item on a display, in order to, for example, indicate position for data entry or for selection of the other item.

Keys 428 of keyboard 232 are disposed on a front face of a housing 406 and positioning wheel 410 is disposed at a side of housing 406. Keyboard 232 is in the example form of a reduced QWERTY keyboard including a plurality of keys 428 that serve as input members. It can be seen that the arrangement of the characters 448 on keys 428 of keyboard 424 is generally of the QWERTY arrangement, albeit with many of keys 428 including two of characters 448. In the example depiction of keyboard 424, many of keys 428 include two characters, such as including a first character 452 and a second character 456 assigned thereto. Characters may include letters, digits, symbols and the like and can additionally include ideographic characters, components thereof, and the like. One of keys 428 of keyboard 424 includes as the characters 448 thereof the letters "Q" and "W", and an adjacent key 428 includes as the characters 448 thereof the letters "E" and "R". Keyboard 424 may be of other configurations, such as an AZERTY keyboard, a QWERTZ keyboard, a Dvorak keyboard, or other keyboard or keypad arrangement, and either reduced or not reduced (i.e. full). In a "full" or non-reduced keyboard or keypad arrangement, each key has a single letter (not multiple letters) of the alphabet assigned to it.

Among keys 428 of keyboard 232 are a <NEXT> key 440 and an <ENTER> key 444. The <NEXT> key 440, wherein, for example, "<NEXT>" may be a symbol or may be the word "next" provided (e.g. printed) on the key, may be pressed to provide a selection input to the processor and provides substantially the same selection input as is provided by a rotational input of positioning wheel 410. Since <NEXT> key 440 is provided adjacent a number of other keys 428 of keyboard 232, the user can provide a selection input to the processor substantially without moving the user's hands away from the keyboard 232 during a text entry operation. Another key, the <ESC> key 445 is disposed on the side of housing 406 adjacent positioning wheel 438, although the same or similar key may be disposed as part of keyboard 232. Among keys 428 of the keyboard 424 additionally is a <DEL> key 486 that can be provided to delete a text entry.

Positioning wheel 410 may serve as another input member and is both rotatable, as is indicated by an arrow 412, to provide selection inputs to the processor, and also can be pressed in a direction generally toward housing 406, as is indicated by an arrow 414 to provide another selection input to the processor. Display 222 may include a cursor 484 that depicts generally where the next input or selection from user interface 402 will be received.

Display 222 is shown in FIG. 4 as displaying a home screen that represents a number of applications 586 depicted as corresponding discrete icons 488. Icons 488 include, for example, an Electronic Mail (E-Mail) icon 490, a Calendar icon 492, an Address Book icon 494, a Meeting icon 496, a Messages icon 497, a Streaming Media icon 498, and a Search icon 499, respectively.

As shown now further in FIG. 5, memory 224 of the mobile device includes a plurality of applications or routines 586 associated with the visually displayed icons 488 of FIG. 4 for the processing of data. Applications 586 may be in any of a variety of forms such as, without limitation, software, firmware, and the like. Applications 586 include, for example, an Electronic Mail (E-Mail) application 588 (FIG. 5) associated with E-mail icon 490 (FIG. 4), a Calendar application 590 (FIG. 5) associated with Calendar icon 492 (FIG. 4), an Address Book application 592 (FIG. 5) associated with Address Book icon 494 (FIG. 4), a Conference Meeting application 594 (FIG. 5) associated with Meeting icon 496 (FIG. 4), a Streaming Media application 596 (FIG. 5) associated with Streaming Media icon 498, a Web Browser application 598 (FIG. 5) associated with Web Browser icon 497 (FIG. 4), a Voice/Telephone application 599 (FIG. 5) associated with Voice/Telephone icon 484, and a Search application 500 (FIG. 5) associated with Search icon 499 (FIG. 4). The PIM application of the mobile device may include one or more of the E-mail application 588, Calendar application 590, and the Address Book application 592. An operating system (OS) program 516 also resides in memory 224.

The "home" screen output is shown in FIG. 4 as currently active and constitutes the main "ribbon" application for displaying the icons 488 shown. An application, such as E-mail application 588 of FIG. 5, may then be initiated (opened or viewed) from user interface 402 by providing a suitable user input to it. For example, E-mail application 588 may be initiated (opened or viewed) by rotating positioning wheel 410 to highlight E-mail icon 490 and providing a selection input by translating positioning wheel 410 in the direction indicated by arrow 438. As another example, display 222 displays icon 499 associated with Search application 500 and accepts input from positioning wheel 410 to initiate a search from that icon 499. Applications 586 may be additionally or alternatively initiated (opened or viewed) from user interface 402 by providing another suitable input to it, such as by suitably rotating or "rolling" trackball 433 and providing a selection input by, for example, pushing the trackball 433 (e.g. somewhat similar to positioning wheel 410 except into the plane of FIG. 4).

Movement, navigation, and/or scrolling with use of a cursor/view positioning mechanism is beneficial given the relatively large size of visually displayed information and the compact size of display 222 of FIG. 4, and since information and messages are typically only partially presented in the limited view of display 222 at any given moment. As previously described, positioning wheel 410 is one helpful cursor/view positioning mechanism to achieve such movement. Positioning wheel 410, which may be referred to as a scrollwheel, specifically includes a circular disc which is rotatable about a fixed axis of housing 302 and may be rotated by the end user's index finger or thumb. When the information or message is being partially displayed, an upwards rotation of positioning wheel 410 causes an upwards scrolling such that display 222 presents viewing of an upper portion of the information or message. Similarly, a downwards rotation of positioning wheel 410 causes a downwards scrolling such that display 222 presents viewing of a lower portion of the information or message. Positioning wheel 410 is mounted along a fixed linear axis such that the end user can depress positioning wheel 410 inwards toward housing 406 (e.g. with the end user's index finger or thumb) for selection of information. Again, see the direction indicated by an arrow 414 of positioning wheel 410 shown.

Although a specific mobile device 202 has just been described, any suitable mobile communication device or terminal may be part of the inventive methods and apparatus which will be described in fuller detail below. Note that many components of mobile device 202 shown and described may not be included (e.g. a full QWERTY keypad may be optional). Again, keyboard 232 and display 222 may be substituted or enhanced with a touch screen display or other suitable input mechanism, or enhanced or replaced with a voice-activated input module. Also, although the description of the architecture relates to a specific example for illustration, where the WLAN is an IEEE 802.11-based network, different environments may be applicable as well. The wireless network may be a WiMAX-based network (i.e. IEEE 802.16), or an Ultra-WideBand (UWB)-based network (i.e. IEEE 802.15), as a few examples.

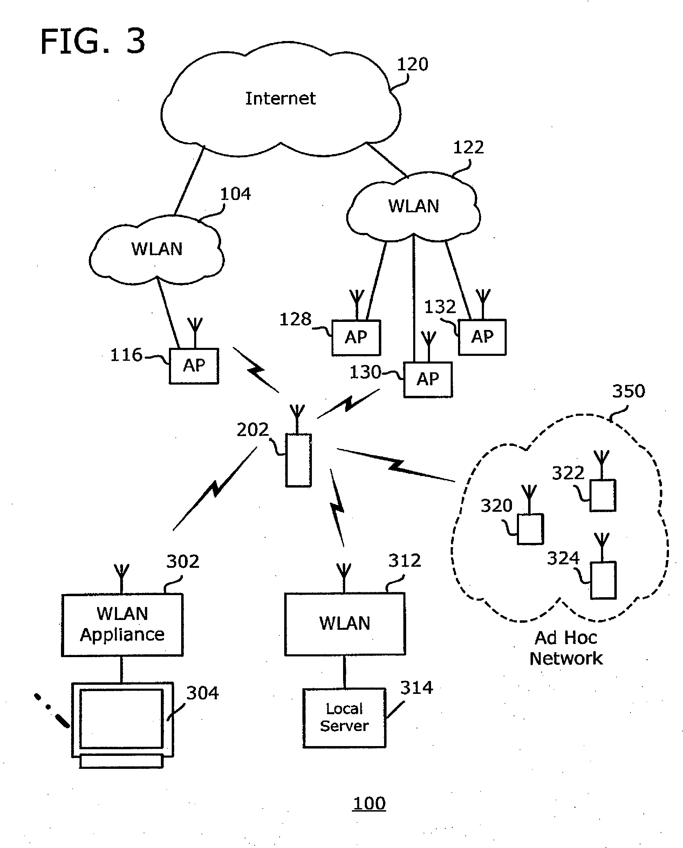

Referring back to FIG. 3, an illustrative representation of a part of the communication system 100 of FIG. 1 which includes WLANs of different types is shown. For one, WLAN 104 and WLAN 122 are wireless networks of the traditional type, which provide for external network connectivity, as described earlier in relation to FIG. 1. For example, WLANs 104 and 122 are configured to provide or facilitate access to the Internet 120 (or other communication network, such as a public communication network) for mobile device 202 when connected therewith. Note that WLANs 104 and 122 providing for external network connectivity may be further differentiated or identified as providing external network connectivity that is either "paid" (or for pay) or "free" (or e.g. high cost versus low cost) for the mobile device.

Other WLANs shown in FIG. 3 may be appliances, such as WLAN appliance 302. WLAN appliance 302 may be configured to connect with an electrical appliance 304. Typically, such WLAN appliances have no external connectivity, and may be referred to as "local-only" networks. As one example, WLAN appliance 302 may be a streaming media player, where electrical appliance 304 is a television (e.g. audio and/or video is streamed from mobile device 202 to the television, or vice versa).

Another type of WLAN having no external connectivity (i.e. a "local-only" network) may be one that provides or facilitates a local service, such as WLAN 312. WLAN 312 may include a local server 314 configured to provide or facilitate the local service. For example, WLAN 312 which includes local server 314 may be configured to provide and facilitate a (e.g. local) commercial transaction (e.g. an e-commerce transaction) through use of an application such as a Web browser application of the mobile device. Here, local server 314 may be configured to facilitate the presenting, order receiving, processing, and/or purchasing of items, e.g. food and beverages, at a local establishment, such as a sports facility or restaurant, via mobile device 202, for the user's receipt at the local establishment. Alternatively, local server 314 may be configured to facilitate the presenting, receiving, and/or processing of wagers at a local establishment, such as a horse race track.

Even other WLANs shown in FIG. 1 are ad hoc wireless networks, such as ad hoc WLAN 350 which includes one or more other mobile devices 320, 322, and 324. Typically, such ad hoc wireless networks provide no external network connectivity. When mobile device 202 is connected in such an ad hoc wireless network, data may be communicated "directly" between mobile device 202 and other mobile devices 320, 322, and 324, i.e. without the data traversing any fixed wireless network infrastructure. For this purpose, mobile device 202 may be configured to enter into and operate in an "ad hoc mode" of operation. Alternatively, mobile device 202 may be configured to operate in an "AP mode" of operation while the other mobile devices 320, 322, and 324 operate in a more conventional "infrastructure mode" of operation, or vice versa.

As described earlier, mobile device 202 has different types of applications stored therein. These applications may include a messaging application (e.g. a PIM application), a voice telephony application, a Web browsing application, a streaming media application, a local service application, a virtual private network (VPN) connection application, a conference meeting application, and/or a military application, as some examples. According to the present disclosure, mobile device 202 is optimized to search for and communicate with the appropriate WLANs based on which type of application is invoked. For example, mobile device 202 may search for WLANs 104 and 122 in response to the messaging application, the voice telephone application, or the Web browser application being invoked. Alternatively, mobile device 202 may search for WLAN appliances (e.g. WLAN appliance 302) in response to the streaming media player application being invoked. Further, mobile device 202 may search for ad hoc WLAN 350 in response to the conference meeting application or the military application being invoked. Also alternatively, mobile device 202 may search for WLANs providing local services (e.g. WLAN 312) in response to a local service application being invoked.

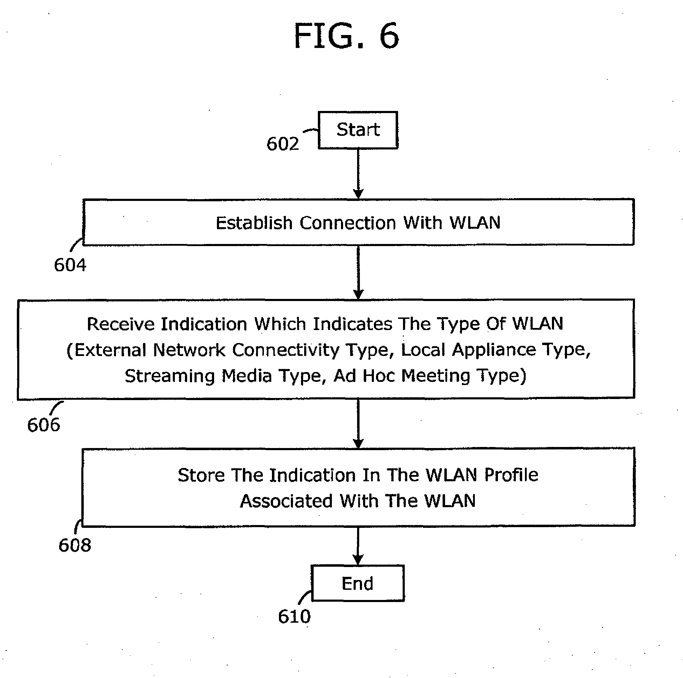

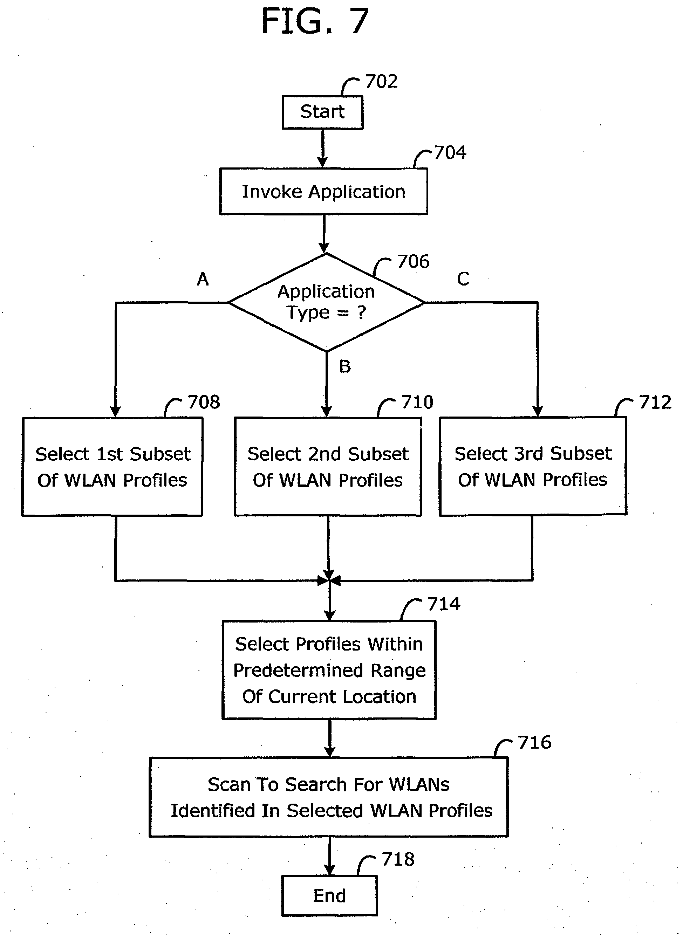

Referring ahead now to FIG. 6, a flowchart of an exemplary method for use in scanning for wireless networks is shown. More particularly, the method of FIG. 6 relates to identifying and indicating different subsets of WLAN profiles corresponding to different types of WLANs. The method of FIG. 6 may make use of the method of FIG. 7, which is described later below. The method of FIG. 6 may be performed by mobile device 202 described in relation to FIGs. 1-5. In particular, the techniques described in relation to the flowchart may be performed by one or more controllers or processors of the mobile device along with its wireless or RF transceiver. A computer program product which may embody the technique may include a computer readable medium (e.g. memory of the communication device, computer disk, CD-ROM, etc.) having computer instructions stored therein which are executable by the one or more processors of the mobile device for performing the technique.

Note that the mobile device is configured to store a plurality of WLAN profiles in its memory, e.g., as a list of preferred networks. Each WLAN profile has WLAN information contained therein. The WLAN information may include an identification which identifies the WLAN (e.g. a SSID or ESSID), and any authentication information for obtaining access to the wireless network (e.g. a network key, passkey, security key, etc.). The mobile device normally operates to search for WLANs identified in its stored WLAN profiles, and communicate in an available one of these WLANs. Conversely, the mobile device normally refrains from searching for and communicating in WLANs other than those WLANs having stored WLAN profiles.

When the mobile device is powered-on, or RF coverage is regained after a coverage loss, the mobile device performs a scanning operation with use of its wireless transceiver to identify one or more available WLANs in its surrounding area. During each scanning operation, the mobile device may transmit a probe request to each WLAN identified in its WLAN profiles, and wait for a probe response from the network in return. Each time the scanning operation fails to result in any connection between the mobile device and a WLAN, the scanning operation is repeated by the mobile device after delaying for a delay period. This process continually repeats until the mobile device connects with one of the WLANs. As apparent, the lesser the number of WLANs to search for during each scanning cycle, the less power the mobile device consumes.

Beginning at a start block 602 of FIG. 6, the mobile device establishes a connection with and operates in a WLAN (step 604 of FIG. 6). If the WLAN is a newly-encountered WLAN, the mobile device may cause a user input prompt to be displayed in the display, where the user input prompt indicates a request for whether a WLAN profile associated with the WLAN should be saved in memory. In response, the mobile device stores a WLAN profile associated with the WLAN in memory, e.g., in its list of preferred networks.

For such usable WLANs, one or more indications which indicate the predetermined type(s) of WLAN are identified (step 606 of FIG. 6). For example, these indications may be received from the WLAN through the wireless transceiver of the mobile device. The predetermined types may be or include, as examples, an external network connectivity type, an appliance type (which is a local-only type), an appliance type such as a streaming media player type (which is a local-only type), a local service type (which is a local-only type), and an ad hoc type (which is a local-only type). The external network connectivity type may be further indicated as being of the "paid" type (or higher cost type) or "free" type (or lower cost type). The mobile device then stores, in the WLAN profile associated with the WLAN, one or more corresponding indications of the received predetermined type(s) (step 608 of FIG. 6). The flowchart of FIG. 6 ends at an end block 610.

Thus, in the present example, a first subset of the WLAN profiles may correspond to WLANs indicated or designated as traditional WLANs having external network connectivity, a second subset of the WLAN profiles may correspond to WLANs indicated or designated as WLAN appliances, and a third subset of the WLAN profiles may correspond to ad hoc WLANs. These first, second, and third subsets of WLAN profiles may (or may not) be mutually exclusive subsets. Again, these are merely examples, and other WLAN types, indicators and subsets of WLAN profiles may be utilized.

Following the example, the mobile device may maintain in each WLAN profile an "external network connectivity" type indication for WLANs 104 and 122 which have external network connectivity, or a "local-only" type indication for WLAN appliance 302, WLAN 312, and ad hoc WLAN 350, which have no external network connectivity. Further, the mobile device may maintain in each WLAN profile an "appliance" type indication for WLAN appliances, such as WLAN appliance 302, and a "non-appliance" type indication for WLANs 104 and 122, WLAN 312, and ad hoc WLAN 350. Also, the mobile device may maintain in each WLAN profile an "infrastructure" type indication for WLANs 104 and 122, WLAN appliance 302, and WLAN 312, or an "ad hoc" type indication for ad hoc WLAN 350. The mobile device may utilize the described indications to select or sort the WLAN profiles for efficient scanning, as described further below in relation to FIG. 7.

In step 606, the mobile device may receive from the WLAN a message which indicates the predetermined type of WLAN. The indication may be a data indication or a bit indication in the message (e.g. a bit indication of "1" indicating a predetermined type, or a bit indication of "0" as not being the predetermined type). This indication may be an indication in a data field which is reserved for the sole purpose of communicating the predetermined type of WLAN. The indication may further be defined as a new, unique information element (IE) defined in IEEE 802.11 or other relevant standard. The WLAN may regularly or periodically broadcast the one or more indicators that are indicative of the type, which are received by the mobile device. Alternatively, the mobile device may transmit a probe request to the WLAN and, in response, receive a probe response which includes the one or more indicators of the type. In such embodiments, the mobile device need not have to connect with the WLAN as described in relation to step 604 of FIG. 6 in order to receive such indication.

Alternatively, the indication may be an indication in a data field which is utilized for a different purpose but nonetheless determinable of the type (e.g. through examination or inference by the mobile device). For example, the mobile device may determine whether the WLAN is a predetermined type based on the WLAN identification (e.g. SSID or ESSID) associated therewith. In this example, the mobile device may maintain in memory a stored list of WLAN identifications of the predetermined type, and compare the WLAN identification with those in the stored list of WLAN identifications. If there is a match between the WLAN identification and any one of the identifications in the stored list, then the mobile device may deem that the WLAN is of the predetermined type. This stored list of WLAN identifications may be stored in advance of device operation, and/or received via its receiver or wireless receiver. For example, the mobile device may receive the list of WLAN identifications on a regional or country basis based on the current location of the mobile device.

Also alternatively, the mobile device may maintain in memory a stored list of names indicative of the predetermined type (e.g. the name "MEDIA", "PLAYER", or any other indicative name), and compare at least portions of the WLAN identification with the names in the stored list of names. If there is a match between a portion of the WLAN identification and any one of the names in the stored list, then the mobile device may deem that the WLAN is of the predetermined type.

Finally, at least some of the types or characteristics of the WLANs may be alternatively or additionally "inferred" or detected by the mobile device during operation with the WLAN. For example, the mobile device may connect with the WLAN for communications, attempt external network connectivity, and detect the WLAN type based on whether or not external network connectivity is successful. As another example, the mobile device may connect with the WLAN, attempt VPN connectivity with use of the VPN connection application, and detect the WLAN type (e.g. VPN connectivity or no VPN connectivity) based on whether or not VPN connectivity is successful. As a further example, the mobile device may connect with the WLAN, attempt an appliance protocol or connection, and detect the WLAN type based on whether or not the appliance protocol or connection is successful.

FIG. 7 is another flowchart of a method for use in scanning for wireless networks is shown. The method of FIG. 7 may make use of the method of FIG. 6, described above. More particularly, the method of FIG. 7 relates to scanning different subsets of WLAN profiles based on which application in the mobile device is invoked. Similar to FIG. 6, the method of FIG. 7 may be performed by mobile device 202 described in relation to FIGs. 1-5. In particular, the techniques described in relation to the flowchart may be performed by one or more controllers or processors of the mobile device along with its wireless or RF transceiver. A computer program product which may embody the technique may include a computer readable medium (e.g. memory of the communication device, computer disk, CD-ROM, etc.) having computer instructions stored therein which are executable by the one or more processors of the mobile device for performing the technique.

Operation commences in FIG. 7 with the mobile device having no established connections with any WLAN. Beginning at a start block 702 of FIG. 7, the mobile device invokes one of the applications stored in its memory (step 704 of FIG. 7). Here, the mobile device may receive, via its user interface, an input signal from a user to invoke the particular application. On the other hand, the application may be a default application which is invoked by the mobile device upon power-up, and/or when no other application is invoked (e.g. no other application being invoked to override the default application).

If the invoked application is a first type of application, then the mobile selects a first subset of WLAN profiles from those stored in memory (step 708 of FIG. 7). The first subset of WLAN profiles may correspond to traditional WLANs having external network connectivity, and be selected by identifying those WLAN profiles having "external network connectivity" type indications stored therein. On the other hand, if the invoked application is a second type of application, then the mobile selects a second subset of WLAN profiles from those stored in memory (step 710 of FIG. 7). The second subset of WLAN profiles may correspond to WLAN appliances, and be selected by identifying those WLAN profiles having "appliance" type indications stored therein. If the application is a third type of application, then the mobile selects a third subset of WLAN profiles from those stored in memory (step 712 of FIG. 7). The third subset of WLAN profiles may correspond to ad hoc WLANs, and be selected by identifying those WLAN profiles having "ad hoc" type indications stored therein. Again, these WLAN types, indicators, and subsets of WLAN profiles are examples and others may be utilized (e.g. select WLAN profiles indicating external network connectivity and VPN connectivity in response to invoking the VPN connection application; select WLAN profiles indicating local service availability in response to invoking the local service application; etc.).

After steps 708, 710, or 712, the mobile device may further select, from the selected subset of WLAN profiles, only those WLAN profiles corresponding to WLANs within a predetermined range of the current location of the mobile device (step 714 of FIG. 7). The process of step 714 will be described in more detail later below. Then, the mobile device operates to scan to search for those WLANs identified in the selected WLAN profiles (step 716 of FIG. 7). On the other hand, the mobile device refrains from scanning to search for WLANs in other, non-selected WLAN profiles.

During each scanning cycle, the mobile device may send a probe request to each WLAN identified in the selected WLAN profiles, and wait to receive a probe response from the network (if available) in return. This may be done with use of the WLAN identification (e.g. SSID) stored in association with each WLAN profile. Each time the scanning operation fails to result in any connection between the mobile device and a WLAN, the scanning operation is repeated by the mobile device after delaying for a delay period. This process continually repeats until the mobile device connects with one of the WLANs. When connected and operating in the network, the mobile device receives services made available or possible in or via the WLAN. The services may be or include a voice telephony service (e.g. VoIP), a data communication service, an Internet access service, a data synchronization service, an e-mail message delivery service, a streaming media player service, a conference meeting service, a military service, etc.. The flowchart ends at an end block 718 of FIG. 7.

As apparent, as the mobile device has a lower number of WLANs to search for in each scanning cycle (i.e. the selected subset of WLAN profiles, in contrast to all WLAN profiles stored in memory), the more quickly and efficiently the mobile device can identify and connect with a suitable WLAN for communications. Further, the mobile device will consume less power as the number of WLANs to search for is lower. For example, if the mobile device has ten (10) WLAN profiles stored therein, five (5) of which are designated as traditional WLANs (i.e. the first subset) and five (5) of which are designated as WLAN appliances (i.e. the second subset), the mobile device only scans to search for half as many WLANs during each scanning cycle.

As described in relation to step 714 of FIG. 7, the mobile device may further select, from the selected subset of WLAN profiles, only those WLAN profiles corresponding to WLANs within a predetermined range of the device's current location. This may be done as follows. Each WLAN profile in the subset of WLAN profiles may include position information corresponding to a geographic position of the WLAN associated therewith. When selecting the WLAN profiles from the subset for scanning (i.e. in step 714 of FIG. 7), the mobile device identifies position information corresponding to a current geographic position of the mobile device. This may done with use of the GPS receiver, where the mobile device may use the GPS receiver to periodically receive its geographic position or location. On the other hand, the mobile device may associate various geographic positions with one or more different cell identifiers of one or more cellular networks being identified.

In the technique, the mobile device compares the position information of the mobile device with the position information in each selected WLAN profile, for identifying whether the mobile device is within a predetermined range of the WLAN. If the mobile device is within the predetermined range of the WLAN, then the mobile device will confirm the selection of the WLAN profile for scanning to search for the WLAN. Otherwise, if the mobile device is outside of the predetermined range of the WLAN, then the mobile device will not select the WLAN profile for scanning, and therefore refrain from scanning to search for the WLAN associated with that WLAN profile.

Thus, techniques for efficient scanning for WLANs based on application type have been described. A mobile communication device invokes a first application or a second application. When the first application is invoked, the mobile device scans to search for one or more WLANs identified in a first subset of WLAN profiles. When the second application is invoked, the mobile device scans to search for one or more WLANs identified in a second subset of WLAN profiles. The first application may be a messaging application, a voice telephony application, or a Web browsing application, which may utilize WLANs having external network connectivity. The second application may be a local appliance application (e.g. a streaming media application) or a local service application which may utilize WLAN appliances or WLANs having no external network connectivity. Alternatively, the second application may be a conference meeting application or proprietary military application which may utilize ad hoc networks having no external network connectivity. Advantageously, a suitable wireless network may be more efficiently identified with use of a technique which reduces power consumption of the mobile device.

The above-described embodiments of the present disclosure are intended to be examples only. Those of skill in the art may affect alterations, modifications and variations to the particular embodiments without departing from the scope of the application. Although the description relates to specific examples for illustration, where the WLAN is an IEEE 802.11-based network, for example, different environments may be applicable as well. As a few other examples, the wireless network may be a Bluetooth-based network, a WiMAX-based network (i.e. IEEE 802.16), or an Ultra-WideBand (UWB)-based network (i.e. IEEE 802.15). The invention described herein in the recited claims intends to cover and embrace all suitable changes in technology.

## Claims

1. A method for use in scanning for wireless local area networks "WLANs" (102, 122, 302, 312, 350) by a mobile device (202) which has a set of WLAN profiles stored therein, the method comprising the acts of:
invoking (704) a first application or a second application in the mobile device (202);
when the first application is invoked, scanning (716) to search for one or more WLANs (102, 122) identified in a first subset of WLAN profiles stored in the mobile device (202); and
when the second application is invoked, scanning (716) to search for one or more WLANs (302, 312, or 350) identified in a second subset of WLAN profiles stored in the mobile device (202).

2. The method according to claim 1, wherein the one or more WLANs (102, 122) identified in the first subset of WLAN profiles comprise one or more WLANs (102, 122) having external network connectivity, and wherein the one or more WLANs identified in the second subset of WLAN profiles are one of:
one or more WLANs (302, 312, 350) having no external network connectivity;
one or more WLAN appliances (302);
one or more WLANs (312) providing a local service;
one or more ad hoc WLANs (350).

3. The method according to claim 1 or claim 2, further comprising:
invoking (704) the first application, the second application, or a third application in the mobile device (202);
when the third application is invoked, scanning (716) to search for one or more WLANs identified in a third subset of WLAN profiles stored in the mobile device (202).

4. The method according to any one of claims 1, 2, or 3, further comprising:
maintaining an external network connectivity indication in each one of the WLAN profiles corresponding to the WLANs (102, 122) identified in the first subset of WLAN profiles; and
maintaining a local-only connectivity indication in each one of the WLAN profiles corresponding to the WLANs (302, 312, 350) identified in the second subset of WLAN profiles.

5. The method according to any one of claims 1-4, further comprising:
for each one of the WLANs (102, 122, 302, 312, 350):
communicating in the WLAN;
identifying, during the communicating, whether the WLAN has external network connectivity or no external network connectivity;
if the WLAN is identified to have external network connectivity, then storing an external network connectivity indication in the WLAN profile corresponding to the WLAN; and
if the WLAN is identified to have no external network connectivity, then storing a local-only connectivity indication in the WLAN profile corresponding to the WLAN.

6. The method according to any one of claims 1-4, further comprising:
for each one of the WLANs one or more WLANs (312) providing a local service:
communicating in the WLAN;
identifying, during the communicating, whether the WLAN has external network connectivity or no external network connectivity;
if the WLAN is identified to have external network connectivity, then storing an external network connectivity indication in the WLAN profile corresponding to the WLAN; and
if the WLAN is identified to have no external network connectivity, then storing a local-only connectivity indication in the WLAN profile corresponding to the WLAN.

7. The method according to any one of claims 1-6, wherein each one of a plurality of the WLAN profiles in the first subset includes position information corresponding to a geographic position of the WLAN associated therewith, and wherein the scanning to search for the one or more WLANs identified in the first subset of WLAN profiles further comprises:
identifying position information corresponding to a geographic position of the mobile communication device;
for each WLAN profile in the first subset:
comparing the position information of the mobile device (202) with the position information of the WLAN for identifying whether the mobile device (202) is within a predetermined range of the WLAN; and
if the mobile device (202) is identified to be within the predetermined range of the WLAN, then scanning to search for the WLAN; and
if the mobile device (202) is identified to be outside of the predetermined range of the WLAN, then refraining from scanning to search for the WLAN.

8. The method according to any one of claims 1-7, further comprising:
wherein the first application comprises a personal information manager application where data synchronization is performed with a remote host server; and
wherein the second application comprises one of a streaming media application, an ad-hoc meeting application or a military communication application.

9. The method according to any one of claims 1-8, wherein the mobile device (202) is operative for communications with WLANs in accordance with IEEE 802.11.

10. A computer program product, comprising:
a computer readable medium;
computer instructions stored in the computer readable medium; and
the computer instructions being executable by one or more processors of a mobile device (202) for performing the method according to any one of claims 1-9.

11. A mobile communication device (202), comprising:
a controller (238);
a radio frequency "RF" transceiver (211) coupled to the controller (238);
the RF transceiver (211) configured to communicate over a communication channel of a wireless communication network;
a memory (224) coupled to the controller (238);
the memory (224) having a set of wireless network profiles stored therein; and
the controller (238) being configured to perform the method of any one of claims 1-9.

## Patentansprüche

1. Ein Verfahren zur Verwendung bei einem Abtasten hinsichtlich drahtloser lokaler Netzwerke (WLANs - Wireless Local Area Networks) (102, 122, 302, 312, 350) durch eine mobile Vorrichtung (202), die einen Satz von WLAN-Profilen darin gespeichert hat, wobei das Verfahren die Vorgänge aufweist:
Aufrufen (704) einer ersten Anwendung oder einer zweiten Anwendung in der mobilen Vorrichtung (202);
wenn die erste Anwendung aufgerufen wird, Abtasten (716), um nach einem oder mehreren WLANs (102, 122) zu suchen, das/die in einem ersten Teilsatz von WLAN-Profilen identifiziert ist/sind, die in der mobilen Vorrichtung (202) gespeichert sind; und
wenn die zweite Anwendung aufgerufen wird, Abtasten (716), um nach einem oder mehreren WLANs (302, 312 oder 350) zu suchen, das/die in einem zweiten Teilsatz von WLAN-Profilen identifiziert ist/sind, die in der mobilen Vorrichtung (202) gespeichert sind.

2. Das Verfahren gemäß Anspruch 1, wobei das eine oder mehrere WLANs (102, 122), das/die in dem ersten Teilsatz von WLAN-Profilen identifiziert ist/sind, ein oder mehrere WLANs (102, 122) mit einer externen Netzwerkkonnektivität aufweist/aufweisen, und wobei das eine oder mehrere WLANs, das/die in dem zweiten Teilsatz von WLAN-Profilen identifiziert ist/sind, eines ist/sind aus:
ein oder mehrere WLANs (302, 312, 350), das/die keine externe Netzwerkkonnektivität hat/haben;
ein oder mehrere WLAN-Gerät(e) (302);
ein oder mehrere WLANs (312), die einen lokalen Dienst vorsehen;
ein oder mehrere Ad-hoc-WLANs (350).

3. Das Verfahren gemäß Anspruch 1 oder Anspruch 2, das weiter aufweist:
Aufrufen (704) der ersten Anwendung, der zweiten Anwendung oder einer dritten Anwendung in der mobilen Vorrichtung (202);
wenn die dritte Anwendung aufgerufen wird, Abtasten (716), um nach einem oder mehreren WLANs zu suchen, das/die in einem dritten Teilsatz von WLAN-Profilen identifiziert ist/sind, die in der mobilen Vorrichtung (202) gespeichert sind.

4. Das Verfahren gemäß einem der Ansprüche 1, 2 oder 3, das weiter aufweist:
Führen einer "externe Netzwerkkonnektivität"-Angabe in jedem der WLAN-Profile, die den WLANs (102, 122) entsprechen, die in dem ersten Teilsatz von WLAN-Profilen identifiziert sind; und
Führen einer "nur lokale Konnektivität"-Angabe in jedem der WLAN-Profile, die den WLANs (302, 312, 350) entsprechen, die in dem zweiten Teilsatz von WLAN-Profilen identifiziert sind.

5. Das Verfahren gemäß einem der Ansprüche 1-4, das weiter aufweist:
für jedes der WLANs (102, 122, 302, 312, 350):
Kommunizieren in dem WLAN;
Identifizieren, während des Kommunizierens, ob das WLAN eine externe Netzwerkkonnektivität oder keine externe Netzwerkkonnektivität hat;
wenn das WLAN als mit einer externen Netzwerkkonnektivität identifiziert wird, dann Speichern einer "externe Netzwerkkonnektivität"-Angabe in dem WLAN-Profil, das dem WLAN entspricht; und
wenn das WLAN als ohne eine externe Netzwerkkonnektivität identifiziert wird, dann Speichern einer "nur lokale Konnektivität"-Angabe in dem WLAN-Profil, das dem WLAN entspricht.

6. Das Verfahren gemäß einem der Ansprüche 1-4, das weiter aufweist:
für jedes der WLANs des einen oder mehrerer WLANs (312), das/die einen Iokalen Dienst vorsieht/vorsehen:
Kommunizieren in dem WLAN;
Identifizieren, während des Kommunizierens, ob das WLAN eine externe Netzwerkkonnektivität oder keine externe Netzwerkkonnektivität hat;
wenn das WLAN als mit einer externen Netzwerkkonnektivität identifiziert wird, dann Speichern einer "externe Netzwerkkonnektivität"-Angabe in dem WLAN-Profil, das dem WLAN entspricht; und
wenn das WLAN als ohne eine externe Netzwerkkonnektivität identifiziert wird, dann Speichern einer "nur lokale Konnektivität"-Angabe in dem WLAN-Profil, das dem WLAN entspricht.

7. Das Verfahren gemäß einem der Ansprüche 1-6, wobei jedes einer Vielzahl der WLAN-Profile in dem ersten Teilsatz Positionsinformation umfasst, die einer geographischen Position des damit assoziierten WLANs entspricht, und wobei das Abtasten zur Suche nach dem einen oder mehreren WLANs, das/die in dem ersten Teilsatz von WLAN-Profilen identifiziert ist/sind, weiter aufweist:
Identifizieren von Positionsinformation, die einer geographischen Position der mobilen Kommunikationsvorrichtung entspricht;
für jedes WLAN-Profil in dem ersten Teilsatz:
Vergleichen der Positionsinformation der mobilen Vorrichtung (202) mit der Positionsinformation des WLANs zum Identifizieren, ob die mobile Vorrichtung (202) innerhalb eines vorgegebenen Bereichs des WLANs ist; und
wenn die mobile Vorrichtung (202) identifiziert wird, innerhalb des vorgegebenen Bereichs des WLANs zu sein, dann Abtasten, um nach dem WLAN zu suchen; und
wenn die mobile Vorrichtung (202) identifiziert wird, außerhalb des vorgegebenen Bereichs des WLANs zu sein, dann Absehen von einem Abtasten, um nach dem WLAN zu suchen.

8. Das Verfahren gemäß einem der Ansprüche 1-7, das weiter aufweist:
wobei die erste Anwendung eine "Personal Information Manager"-Anwendung aufweist, bei der eine Datensynchronisation mit einem entfernten Host-Server durchgeführt wird; und
wobei die zweite Anwendung eine aus einer Streaming-Media-Anwendung, einer Ad-hoc-Sitzungs-Anwendung oder einer militärischen Kommunikationsanwendung aufweist.

9. Das Verfahren gemäß einem der Ansprüche 1-8, wobei die mobile Vorrichtung (202) betriebsfähig ist für Kommunikationen mit WLANs in Übereinstimmung mit IEEE 802.11.

10. Ein Computerprogrammprodukt, das aufweist:
ein computerlesbares Medium;
Computeranweisungen, die in dem computerlesbaren Medium gespeichert sind; und
wobei die Computeranweisungen durch einen oder mehrere Prozessor(en) einer mobilen Vorrichtung (202) ausführbar sind zur Durchführung des Verfahrens gemäß einem der Ansprüche 1-9.

11. Eine mobile Kommunikationsvorrichtung (202), die aufweist:
eine Steuervorrichtung (238);
einen Funkfrequenz(RF - radio frequency)-Transceiver (211), der mit der Steuervorrichtung (238) gekoppelt ist;
wobei der RF-Transceiver (211) konfiguriert ist zum Kommunizieren über einen Kommunikationskanal eines drahtlosen Kommunikationsnetzwerks;
einen Speicher (224), der mit der Steuervorrichtung (238) gekoppelt ist;
wobei der Speicher (224) einen Satz von darin gespeicherten drahtlosen Netzwerkprofilen hat; und
die Steuervorrichtung (238) konfiguriert ist zum Durchführen des Verfahrens gemäß einem der Ansprüche 1-9.

## Revendications

1. Procédé destiné à être utilisé dans le balayage de recherche de réseaux locaux sans fil (102, 122, 302, 312, 350) par un dispositif mobile (202) qui possède enregistré un ensemble de profils de réseaux locaux sans fil, le procédé comprenant les étapes consistant à :
appeler (704) une première application ou une deuxième application sur le dispositif mobile (202) ;
si la première application est appelée, lancer (716) un balayage de recherche d'un ou plusieurs réseaux locaux sans fil (102, 122) identifiés dans un premier sous-ensemble de profils de réseaux locaux sans fil stocké dans le dispositif mobile (202) ; et
si la deuxième application est appelée, lancer (716) un balayage de recherche d'un ou plusieurs réseaux locaux sans fil (302, 312 ou 350) identifiés dans un deuxième sous-ensemble de profils de réseaux locaux sans fil stocké dans le dispositif mobile (202).

2. Procédé selon la revendication 1, dans lequel lesdits un ou plusieurs réseaux locaux sans fil (102, 122) identifiés dans le premier sous-ensemble de profils de réseaux locaux sans fil comprennent un ou plusieurs réseaux locaux sans fil (102, 122) offrant une connectivité réseau extérieure et dans lequel lesdits un ou plusieurs réseaux locaux sans fil identifiés dans le deuxième sous-ensemble de profils de réseaux locaux sans fil sont les uns des suivants :
un ou plusieurs réseaux locaux sans fil (302, 312, 350) n'offrant pas de connectivité réseau extérieure ;
une ou plusieurs applications de réseaux locaux sans fil (302) ;
un ou plusieurs réseaux locaux sans fil (312) fournissant un service local ;
un ou plusieurs réseaux locaux sans fil ad hoc (350).

3. Procédé selon la revendication 1 ou la revendication 2, comprenant en outre les étapes consistant à :
appeler (704) la première application, la deuxième application ou une troisième application sur le dispositif mobile (202) ;
si la troisième application est appelée, lancer (716) un balayage de recherche d'un ou plusieurs réseaux locaux sans fil identifiés dans un troisième sous-ensemble de profils de réseaux locaux sans fil stocké dans le dispositif mobile (202).

4. Procédé selon l'une quelconque des revendications 1, 2 ou 3, comprenant en outre les étapes consistant à :
gérer une indication de connectivité réseau extérieure dans chacun des profils de réseaux locaux sans fil correspondant aux réseaux locaux sans fil (102, 122) identifiés dans le premier sous-ensemble de profils de réseaux locaux sans fil ; et
gérer une indication de connectivité purement locale dans chacun des profils de réseaux locaux sans fil correspondant aux réseaux locaux sans fil (302, 312, 350) identifiés dans le deuxième sous-ensemble de profils de réseaux locaux sans fil.

5. Procédé selon l'une quelconque des revendications 1 à 4, comprenant en outre les étapes consistant à ;
pour chacun des réseaux locaux sans fil (102, 122, 302, 312, 350) :
communiquer avec le réseau local sans fil ;
dans la communication, déterminer si le réseau local sans fil possède une connectivité réseau extérieure ou pas de connectivité réseau extérieure ;
s'il est déterminé que le réseau local sans fil offre une connectivité réseau extérieure, enregistrer une indication de connectivité réseau extérieure dans le profil de réseau local sans fil correspondant au réseau local sans fil ; et
s'il est déterminé que le réseau local sans fil n'offre pas de connectivité réseau extérieure, enregistrer une indication de connectivité purement locale dans le profil de réseau local sans fil correspondant au réseau local sans fil.

6. Procédé selon l'une quelconque des revendications 1 à 4, comprenant en outre les étapes consistant à :
pour chacun desdits un ou plusieurs réseaux locaux sans fil (312) offrant un service local :
communiquer avec le réseau local sans fil ;
dans la communication, déterminer si le réseau local sans fil possède une connectivité réseau extérieure ou pas de connectivité réseau extérieure ;
s'il est déterminé que le réseau local sans fil offre une connectivité réseau extérieure, enregistrer une indication de connectivité réseau extérieure dans le profil de réseau local sans fil correspondant au réseau local sans fil ; et
s'il est déterminé que le réseau local sans fil n'offre pas de connectivité réseau extérieure, enregistrer une indication de connectivité purement locale dans le profil de réseau local sans fil correspondant au réseau local sans fil.

7. Procédé selon l'une quelconque des revendications 1 à 6, dans lequel chaque profil parmi la pluralité de profils de réseaux locaux sans fil dans le premier ensemble comprend des informations de position correspondant à une position géographique du réseau local sans fil qui lui est associé et dans lequel le balayage de recherche desdits un ou plusieurs réseaux locaux sans fil identifiés dans le premier sous-ensemble de profils de réseaux locaux sans fil comprend en outre les étapes consistant à :
identifier des informations de position correspondant à une position géographique du dispositif de communication mobile ;
pour chaque profil de réseau local sans fil dans le premier sous-ensemble :
comparer les informations de position du dispositif mobile (202) avec les informations de position du réseau local sans fil afin de déterminer si le dispositif mobile (202) se situe à une portée prédéterminée du réseau local sans fil ; et
s'il est déterminé que le dispositif mobile (202) se situe à la portée prédéterminée du réseau local sans fil, lancer la recherche du réseau local sans fil ; et
s'il est déterminé que le dispositif mobile (202) se situe hors de la portée prédéterminée du réseau local sans fil, ne pas lancer la recherche du réseau local sans fil.

8. Procédé selon l'une quelconque des revendications 1 à 7, comprenant en outre les étapes consistant à :
dans lequel la première application consiste en une application de gestionnaire d'informations personnelles dans laquelle une synchronisation a lieu avec un serveur distant ; et
dans lequel la deuxième application consiste en une application de diffusion continue de multimédia, une application de rencontre ad hoc ou une application de communication militaire.

9. Procédé selon l'une quelconque des revendications 1 à 8, dans lequel le dispositif mobile (202) est en mesure de communiquer avec des réseaux locaux sans fil selon la norme IEEE 802.11.

10. Progiciel d'ordinateur, comprenant :
un support lisible par ordinateur ;
des instructions d'ordinateur stockées sur le support lisible par ordinateur ;
les instructions d'ordinateur pouvant être exécutées par un ou plusieurs processeurs d'un dispositif mobile (202) afin de mettre en oeuvre le procédé selon l'une quelconque des revendications 1 à 9.

11. Dispositif de communication mobile (202) comprenant :
un contrôleur (238) ;
un émetteur-récepteur de radiofréquences (211) couplé au contrôleur (238) ;
l'émetteur-récepteur de radiofréquences (211) étant configuré pour communiquer sur un canal de communication d'un réseau de communication sans fil ;
une mémoire (224) couplée au contrôleur (238) ;
la mémoire (224) comportant un ensemble de profils de réseaux sans fil qui y est stocké ; et
le contrôleur (238) étant configuré pour mettre en oeuvre le procédé selon l'une quelconque des revendications 1 à 9.
